# EUROPEAN PATENT APPLICATION

(11) **EP 1 686 418 A1**
(43) Date of publication of application: **02.08.2006**
(21) Application number: 06075191.4
(22) Date of filing: 26.01.2006
(51) Int. Cl.: G03B 21/00, F21V 21/38

(54) **In height or otherwise adjustable device for mounting of a projection device.**

(30) Priority: 26.01.2005 NL 1028121
(71) Applicant: Audipack Verkoop B.V., 2751 GT Moerkapelle (NL)
(72) Inventor: The designation of the inventor has not yet been filed
(74) Representative: Klooster, Jan Hanri

(57) **Abstract**

In height or otherwise adjustable device for mounting of a projection device essentially consisting of a first support frame (3) being mountable upon or nearby a wall portion, like a ceiling portion, and of a second support frame (4) being suspended at some distance of the first frame; the first support frame (3) being provided with an adjustment mechanism (6) provided with a cable drum (28) for winding up and unwinding of at least one hoisting wire (15, 18) the adjustment mechanism (6) having an small overall height.

## Description

The invention relates to a in height or otherwise adjustable device for mounting of a projection device like a video-beamer or a slide projector. Generally such devices are mounted nearby or in a wall portion, like a ceiling portion, to displace the projection device for use away from the wall or ceiling portion and to return the device again after use into its initial position in or nearby the wall or ceiling. Suchlike adjustable devices are generally provided with an electric adjustment mechanism and a control device, like a remote control, so that without application of human muscular force the device may be displaced and folded up or unfolded near or in a wall portion, preferably to hide the projector from view. Known adjustable devices such as ceiling lifts are generally provided with an adjustment mechanism comprising a tube motor and a cable tube or a spindle motor or actuator for winding and unwinding of a hoisting wire. These known solutions have the disadvantage that the ceiling lifts become heavy in weight due to the heavyweight motors and furthermore are cost expensive as a result thereof.

It is an object of the invention to provide for a compact lightweight adjustable device for mounting a projection device which can be produced at low cost and which has a low overall height so that it can be mounted and hided from view behind a false ceiling. Furthermore the adjustable device must be strong and reliable and should be accurately and stable positionable and should have a precisely adjustable mechanism.

This objective is achieved by an adjustable device essentially consisting of a first support frame being mountable upon or nearby a wall portion, like a ceiling portion, and of a second support frame being suspended at some distance of the first frame; the second frame being movably and foldably mounted to the first support frame by means of one or more interconnections, like a coupling mechanism, whereby the first support frame is provided with an adjustment mechanism for folding up and unfolding the second support frame, the adjustment mechanism comprising:
at least one hoisting wire,
wire guide means like a guide roll,
a cable drum for winding up and unwinding one or more hoisting wires ,
drive means, like a driving motor and a gear wheel drive, coupled to the cable drum for rotating the cable drum;
the first wire end of the hoisting wire being connected to the cable drum and the second wire end being connected to the second support frame;
furthermore the adjustment mechanism having an small overall height.

By configuring the adjustment mechanism comprising a cable drum and a gear wheel drive coupled thereto it may be easily enclosed in the first support frame and as a result have a small overall height, and furthermore it can be produced at low costs.

Preferably the coupling mechanism is a mechanism known per se like a lazy-tongs mechanisms; the mechanisms being hingingly provided on both sides of the support frames or like a telescoping mechanism. By using this elements a lightweight, compact and exact adjustable device is obtained.

Particularly the cable drum is provided with a second hoisting cable its second wire end being connected to the second support frame by wire guide means like a second guide roll. By using a second hoisting wire the folding in and unfolding of the device will be more precise and the construction may be less heavy so that the weight and the production costs will decrease.

In a preferred embodiment the cable drum is provided with a circumferential surface for receiving the windings of the hoisting wire (portion) the surface optionally being provided with one or more wire guides. With these measures folding in and unfolding will be easier and more uniform and the chance off entanglement of the wires is decreased.

Preferably that the cable drum is provided with a recess for receiving one or more first hoisting wire ends. The recess facilitates mounting and replacement of the wire thereby decreasing production and maintenance costs.

Particularly the first and the second hoisting wire are mutually interconnected into one piece of wire, by interconnecting both first wire ends. Combining both wires into one wire facilitates adjustment of the device because configuring equal wires lengths can be performed easily.

In a preferred embodiment the cable drum is provided with a first feed-through opening between the first wire guide and the recess and with a second feed-through opening between the second wire guide and the recess for guiding through and attachment of the hoisting wires or the hoisting wire portions. Production time and costs are both reduced because the wire may now be easily positioned into both wire guides and connected to the cable drum.

Preferably the second support frame is provided at some distance with a ceiling frame; the frames being mutually adjustable by means of one or more mounting arms. With this means the device may be easily adjusted to the available space during mounting upon a wall portion.

Particularly the dimensions (height, width and length) of support frames conform to the dimensions of a ceiling tile. As a result thereof the mounting of a the device behind a false ceiling is easy and may be easily hided from view in folded up position.

The invention also relates to an adjustment mechanism for use in an adjustable device. This mechanism comprises:
- a cable drum for winding up and unwinding one or more hoisting wires having a vertically positioned rotation axis;
- at least one hoisting wire,
- wire guide means like a guide roll,
- drive means, like a driving motor (8) and a gear wheel drive (7, 9), coupled to the cable drum (28) for rotating the cable drum (28).
By winding the hoisting wire upon an cable drum having a vertically positioned rotation axis an small overall height is needed for the elements of the adjustment mechanism, while at the same time a reliable and precise folding in and unfolding may be guaranteed.

Preferably one of the drive means is a toothed or gear wheel provided with teeth, whereby the wheel is fixed to the cable drum or the wheel and the drum are shaped as one body. Particularly the mechanism further comprises:
- a flat box-shaped mounting space,
- a pinion with a pinion shaft driven by a motor engaging the toothed wheel,
- a wire guide or slot provided upon the circumferential surface of the cable drum for receiving the windings of the hoisting wire ,
- a recess provided in the cable drum and a feed-through opening between the wire guide and the recess.
By guiding the hoisting wire in a wire guide the probability of entanglement of the wires is minimised and furthermore allows a stable and smooth operation of the device.
Preferably the winding surface of the cable drum essentially has a vertical orientation and furthermore the mounting space is provided with one or more guide pawls or pegs essentially having a vertical orientation, the pegs being positioned adjacent to the circumference of the cable drum for guiding the hoisting wires and preventing entanglement of the wires during rotation of the cable drum. Entanglement and disengagement of the wires from the wire guides is prevented by these pegs rendering the device more fool and fail proof.

The invention also relates to a method for mounting an adjustable device to a ceiling comprising the following step:
- mounting the first support frame in the space between the false ceiling and the ceiling, in such a way that in folded up position the second support frame and the projection device connected therewith are essentially positioned between the ceiling and the false ceiling.

The invention is further explained by means of the drawing in which:
Fig. 1 shows an overall perspective view of the adjustable device according to the invention;
Fig. 2 shows a perspective top view of the adjustable device;
Fig. 3 shows a perspective bottom view of the adjustable device;
Fig. 4A shows a perspective bottom view of the cable drum with interconnected toothed wheel shaped into one body and
Fig. 4B shows the toothed wheel of Fig.4A provided with hoisting wires.

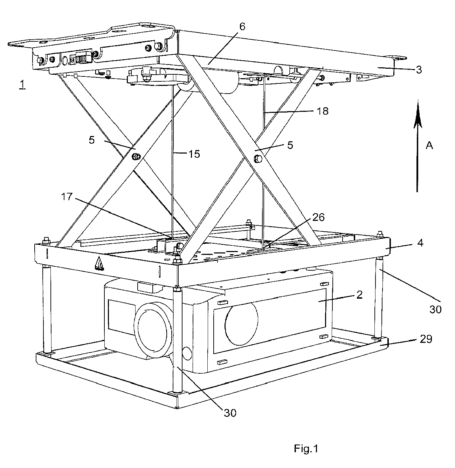

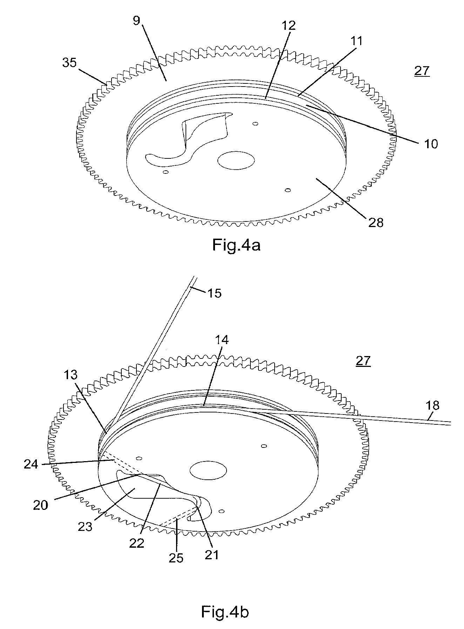

In the drawing Fig.1 is shown in unfolded position the in height or otherwise adjustable device 1 according to the invention, for use as a ceiling lift for a projection device. In this embodiment the ceiling lift 1 comprises a first support frame 3, a second support frame 4 and a coupling mechanism 5, performed as a linking mechanism. Projection device 2 is connected underneath second support frame 4 by means of means known per se like bolts and nuts. Underneath projection device 2 is provided ceiling frame 29 for optionally mounting a ceiling element like a ceiling tile. This frame portion 29 preferably corresponds in shape en dimensions with the pattern of e.g. ceiling tiles (cassettes) or wall tiles. In this way the projection device may be concealed or hided from view when the device is in folded up position. The ceiling frame 29 is adjustably connected with the second support frame 4 by means of mounting arm 30. In use the mounting arm 30 preferably is adjusted in such way, that the ceiling frame 29 is as close as possible to the bottom side of the second support frame 4 so that the overall height will be as small as possible. The first support frame 3 is mounted to a wall portion like a ceiling. The ceiling lift may be folded up by moving the second support frame to the first support frame 3 in the direction of arrow A by means of the hoisting wires 15, 18. Each hoisting wire 15, 18 is connected with its first wire end to cable drum 28 (zie Fig.4B) and with its second wire end 17, 26 to the second support frame 4. The hoisting wires 15, 18 are moving in and out of the support frame 3 by means of an adjustment mechanism 6 so that as a result the ceiling lift is unfolded or folded up. When the ceiling frame 29 is strongly and rigidly constructed the projection device 2 may be positioned upon the ceiling frame 29 as an alternative for attachment to the second support frame 4. In this embodiment two hoisting wires 15, 18 and two coupling mechanisms 5 are used, but it is also possible to perform the ceiling lift with one hoisting wire and/or with one coupling mechanism. In the embodiment of Fig.1 a linked or hinged mechanism is applied as a coupling mechanism 5, but also other well known solutions like a telescopic mechanism are part of the scoop of the invention. The device according to the invention is preferably mounted to the ceiling by positioning the first support frame 3 in a space between a false ceiling and the ceiling, so that in the folded up position the second support frame 4 and the projection device mounted thereon essentially are positioned in aforesaid space and concealed and hided from view.

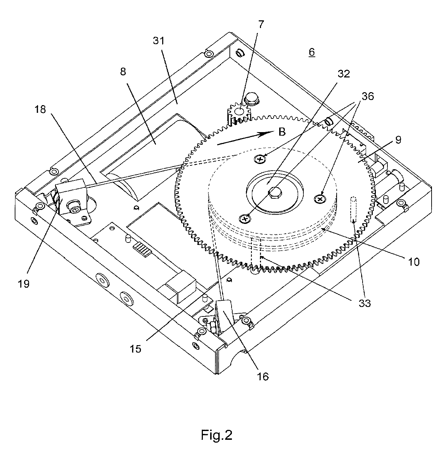

In Fig.2 is shown in detail the adjustment mechanism 6 with toothed wheel 9 and a first and a second hoisting wire 15, 18. The adjustment mechanism 6 comprises flat box-shaped mounting space 31 provided with elements such as: drive means like a toothed wheel 9 being rotatable around axis 32, pinion 7 engaging the toothed wheel 9 and a drive motor 8 rotating the pinion 7; two guide rolls of feed-through guides 16, 19 and two hoisting wire portions 15, 18.
In this embodiment the toothed wheel 9 is fixed to the cable drum 28 by means of three bolts 36, but the wheel 9 and the drum may also be shaped as one body as shown in Fig 4A or 4B or be mutually attached otherwise. The hoisting wire portions 15, 18 are connected to the cable drum 28 in such a way that by rotating the toothed wheel in the direction of arrow B the hoisting wires are winded upon the circumferential surface 10 of the cable drum or cylindrical body 28 connected to the toothed wheel 9 so that as a result the ceiling lift is folded up. The hoisting wire portions 15, 18 are guided through the flat box-shaped mounting space 31 by means of feed-through guides or guide rolls 16, 19 to the second support frame 4. In a preferred embodiment the adjustment mechanism is furthermore provided with guide pegs 33 to facilitate guiding of the hoisting wire portions 15, 18 upon the circumferential surface 10 of the cable drum 28. Entanglement and disengagement of the wires from the wire guides is prevented by these pegs 33 rendering the device fool and fail proof. These situations occur when the motor 8 and the cable drum 28 are unwinding the wires while at the same time the second support frame 4 is prevented from moving downward or when the second support frame 4 is displaced upwards while the cable drum 28 is not winding up the wires. By rotating toothed wheel 9 in the opposite direction of arrow B, the hoisting wires15, 18 are unwinded from the cable drum 28 so that as a result the ceiling lift 1 is unfolded.

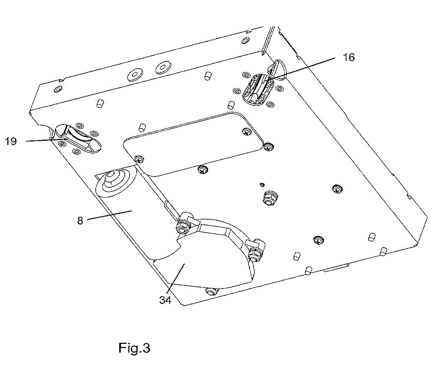

In Fig.3 is shown the bottom side of the adjustment mechanism 6 with motor 8 and guide rolls 16, 19. Transmission mechanism or gearcase 34 transmits the rotation of the horizontal shaft of the motor 8 to the vertically positioned shaft of pinion 7. Generally the gearcase 34 comprises a worm wheel (not shown) upon the motor shaft and a toothed wheel (not shown) upon the shaft of pinion 7 engaging the worm wheel, but other configurations may be applied. In order to achieve an small overall height the motor 8 axis and the cable drum axis 32 are positioned horizontally and the actuator means 7 there in between comprises an vertical axis. Alternatively the motor 8 may rotate the cable drum 28 by using other state of the art means like a geared belt or a chain gear.

In Fig.4A, 4B is shown in more detail wheel element 27 consisting of toothed wheel 9 and cable drum 28 configured into one body according to the invention. The toothed wheel 9 is provided with teeth 35, for engagement with pinion 7, and the cable drum 28 is provided with circumferential surface 10 of a cylindrical body or otherwise. In a preferred embodiment the circumferential surface 10 is provided with wire guides 11, 12 preferably shaped as two circumferential slots or grooves. In Fig.4B is shown two hoisting wire portions 15, 18 winded upon the circumferential surface 10 and configuring the first and second wire windings 13, 14. Furthermore the cable drum 28 is provided with recess 23 to facilitate the mutual connection of the hoisting wires onto the wheel element 27. In this preferred embodiment both hoisting wires are advantageously interconnected into a hoisting wire of one piece, whereby the hoisting wire ends 20, 21 are guided through the first and the second feed-through openings 24, 25, so that as a result the hoisting wire is configured into a feed-through loop 22 in recess 23. Moreover this embodiment has the advantage that the correct or intended length, like equal wire lengths, of both hoisting wires 15, 18, is easily adjusted by displacing the hoisting wire through both feed-trough openings 24, 25. Preferably the circumferential surface 10 is provided with a first and a second wire guide for the first and the second hoisting wire portions 15, 18 respectively, thus allowing the hoisting wires to be winded upon and from the circumferential surface 10 at fixed separate positions so that as a result the probability of entanglement of the wires is reduced. Preferably the first feed-through opening 24 is provided between the first wire guide 11 and the recess 23 and the second feed-through opening 25 is provided between the second wire guide 12 and the recess 23.
In a preferred embodiment the length of de stroke of the wires between the folded up and the unfolded position of the ceiling lift conforms to the length of the wire slot(s) on the circumferential surface. This goal may be achieved by choosing a suitable diameter of the cable drum 28 such that one circular wire slot has a length equal to the stroke length or half the stroke length. This goal may also be achieved by choosing a cable drum diameter and providing spirally the required wire slot length upon the circumferential surface 10. Particularly the diameter of the cable drum has a value between 50 mm and 250 mm and is preferably 120 mm; the circumference of the cable drum has therefore a value between 157 mm and 785 mm and is preferably 377 mm; and the stroke has a value of ½ - 4 (windings) multiplied by the circumference and is preferably two time 377 mm = approximately 700 mm.

The invention is not limited to the above described embodiment bus comprises all equivalent measures know per se to a person skilled in the art, like applying more then two hoisting wires.

## Claims

1. In height or otherwise adjustable device for mounting a projection device (2), in the device essentially consisting of a first support frame (3) being mountable upon or nearby a wall portion, like a ceiling portion, and of a second support frame (4) being suspended at some distance of the first frame; the second frame (4) being movably and foldably mounted to the first support frame (3) by means of one or more interconnections, like a coupling mechanism, whereby the first support frame is provided with an adjustment mechanism (6) for folding up and unfolding the second support frame (4), the adjustment mechanism comprising:
- at least one hoisting wire (15),
- wire guide means like a guide roll (16),
- a cable drum (28) for winding up and unwinding one or more hoisting wires (15),
- drive means, like a driving motor (8) and a gear wheel drive (7, 9), coupled to the cable drum (28) for rotating the cable drum (28);
the first wire end (20) of the hoisting wire being connected to the cable drum (28) and the second wire end (17) being connected to the second support frame (4);
furthermore the adjustment mechanism having an small overall height.

2. Device for mounting a projection device according to claim 1, **characterized in that** the coupling mechanism (5) is a mechanism known per se like a lazy-tongs mechanisms; the mechanisms being hingingly provided on both sides of the support frames (3,4) or like a telescoping mechanism.

3. Device for mounting a projection device according to claim 1 or 2, **characterized in that** the cable drum (28) is provided with a second hoisting cable (18) its second wire end (24) being connected to the second support frame (4) by wire guide means like a second guide roll (17).

4. Device for mounting a projection device according to anyone of the preceding claims 1-3, **characterized in that** the cable drum is provided with a circumferential surface(10) for receiving the windings of the hoisting wire (portion) (15, 18) the surface optionally being provided with one or more wire guides (11,12).

5. Device for mounting a projection device according to anyone of the preceding claims 1 - 4, **characterized in that** the cable drum (28) is provided with a recess (23) for receiving one or more first hoisting wire ends (17,24).

6. Device for mounting a projection device according to anyone of the preceding claims 3-5, **characterized in that** the first (15) and the second hoisting wire (18) are mutually interconnected into one piece of wire, by interconnecting both first wire ends (20,21).

7. Device for mounting a projection device according to anyone of the preceding claims 1 - 6, **characterized in that** the cable drum (9) is provided with a first feed-through opening (24) between the first wire guide (11) and the recess (23) and with a second feed-through opening (25) between the second wire guide (12) and the recess (23) for guiding through and attaching the hoisting wires or the hoisting wire portions (15, 18).

8. Device for mounting a projection device according to anyone of the preceding claims 1 - 7, **characterized in that** the second support frame (3) is provided at some distance with a ceiling frame (29); the frames being mutually adjustable by means of one or more mounting arms (30).

9. Device for mounting a projection device according to anyone of the preceding claims 1 - 4, **characterized in that** the dimensions (height, width and length) of support frames (3, 4, 29) conform to the dimensions of a ceiling tile.

10. Method for mounting an device according to anyone of the preceding claims 1
- 9 to the ceiling comprising the following step:
- mounting the first support frame in the space between the false ceiling and the ceiling, in such a way that in folded up position the second support frame en the projection device connected therewith are essentially positioned between the ceiling and the false ceiling.

11. Adjustment mechanism for use in an adjustable device according to anyone of the preceding claims 1-9, comprising:
- a cable drum (28) for winding up and unwinding one or more hoisting wires (15) having a vertically positioned rotation axis (32);
- at least one hoisting wire (15),
- wire guide means like a guide roll (16),
- drive means, like a driving motor (8) and a gear wheel drive (7, 9), coupled to the cable drum (28) for rotating the cable drum (28).

12. Adjustment mechanism according to claim 11, **characterized in that** one of the drive means is a toothed or gear wheel (27) provided with teeth (35), whereby the wheel (27) is fixed to the cable drum (28) or the wheel (27) and the drum (28) are shaped as one body (9).

13. Adjustment mechanism according to claims 11 or 12, **characterized in that** the mechanism further comprises:
- a flat box-shaped mounting space (31),
- a pinion (7) with a pinion shaft driven by a motor (8) engaging the toothed wheel (27),
- a wire guide or slot (11, 12) provided upon the circumferential surface (10) of the cable drum (28) for receiving the windings of the hoisting wire (15),
- a recess (23) provided in the cable drum (28) and a feed-through opening (25) between the wire guide (11 12) and the recess (23).

14. Adjustment mechanism according to claims 11 or 12, **characterized in that** the winding surface (10) of the cable drum (28) essentially has a vertical orientation and furthermore the mounting space (31) is provided with one or more guide pawls or pegs (33) essentially having a vertical orientation, the pegs being positioned adjacent to the circumference (10) of the cable drum (28) for guiding the hoisting wires (15, 18) and preventing entanglement of the wires during rotation of the cable drum (28).
